# FASCICULE DE BREVET EUROPEEN

(11) **EP 0 615 183 B1**
(45) Date de publication et mention de la délivrance du brevet: **23.12.1998**
(21) Numéro de dépôt: 94400250.0
(22) Date de dépôt: 04.02.1994
(51) Int. Cl.: G06F 3/033

(54) **Système informatique comprenant un terminal pour un dialogue homme/machine avec le système informatique faisant intervenir une pluralité d'éléments de visualisation**
Datenverarbeitungssystem mit einem Terminal für Mensch/Maschine-Dialog mit dem Datenverarbeitungssystem, das viele sichtbaren Ikonen verwendet
Computer system comprising a terminal for human/machine dialog with the computer system employing multiple visual elements

(30) Priorité: 12.03.1993 FR 9302981
(43) Date de publication de la demande: 14.09.1994
(73) Titulaire: SEXTANT AVIONIQUE S.A., 92366 Meudon la Forêt Cédex (FR)
(72) Inventeur: Fagard, Pierre, F-78180 Montigny le Bretonneux (FR); Jahier, Isabelle, F-75015 Paris (FR)
(74) Mandataire: de Saint-Palais, Arnaud Marie

(56) Documents cités:
- EP-A- 0 275 192
- EP-A- 0 562 929
- US-A- 3 701 945
- EOSD-ELECTRO-OPTICAL SYSTEMS DESIGN vol. 13, no. 7 , Juillet 1981 , CHICAGO, IL, USA pages 31 - 44 TEBO A. R. ET AL 'Cockpit Displays-Works of Ingenuity and Splendor'

## Description

La présente invention concerne un système informatique comprenant une pluralité d'éléments d'affichage et/ou de signalisation et un terminal pour un dialogue homme/machine avec le système informatique.

Elle s'applique notamment, mais non exclusivement, à la réalisation d'une régie de commande permettant d'avoir un accès rapide à une commande ou à un paramètre à modifier qui se trouve affiché sur l'un quelconque des dispositifs de visualisation équipant un poste de pilotage d'un aérodyne.

D'une façon générale, on sait que dans les installations de ce genre, on a déjà proposé plusieurs solutions permettant de répondre aux besoins d'accès et de modifications des paramètres affichés sur les dispositifs de visualisation.

Une première solution consiste à équiper les écrans de visualisation, de surfaces tactiles permettant l'accès direct aux paramètres à modifier ou à désigner qui s'y trouvent affichés.

Cette solution qui s'intègre au dispositif de visualisation et qui permet un accès rapide et instinctif aux données à modifier présente un certain nombre d'inconvénients, tels que :
- l'altération des images en raison de la présence de la surface tactile sur l'écran de visualisation,
- l'apparition de marques de doigts à l'écran, liée à l'utilisation normale de la surface tactile,
- un coût élevé du fait qu'elle exige autant de surfaces tactiles que d'écrans de visualisation,
- une certaine fragilité et un risque d'usure de la surface tactile pouvant engendrer une gêne visuelle (rayures, altération des traitements anti-reflets...), voire des pannes.

Cette solution impose en outre que les différents écrans d'affichage soient disposés à portée de la main de l'opérateur.

Une seconde solution fait intervenir une architecture dans laquelle un équipement spécifique, tel qu'une tablette tactile, permet de déplacer un curseur sur la donnée à modifier, affichée par l'écran d'un dispositif de visualisation sélectionné parmi n.

Cette solution présente l'avantage d'être moins coûteuse (d'autant moins que le nombre de visualisations à commander est élevé), de présenter une grande souplesse d'utilisation (mode curseur, pointeur absolu, relatif, etc...) ainsi qu'une fiabilité et qu'une robustesse satisfaisantes.

Elle présente cependant de nombreux inconvénients dus au fait que :
- il n'y a pas de retour des actions effectuées sur la tablette,
- les modes de fonctionnement ne sont pas évidents (la tablette est muette),
- les désignations de paramètres proches les uns des autres sur un écran chargé peuvent être difficiles (nécessité d'une finesse gestuelle souvent incompatible avec les conditions de vol, en particulier dans un avion d'arme).

Cette solution qui accroît la charge de travail du pilote est donc pénalisante.

L'invention a donc plus particulièrement pour but de supprimer ces inconvénients en cumulant les avantages des solutions précédemment exposées.

Elle propose, à cet effet, un système informatique comprenant au moins un processeur, une pluralité d'éléments d'affichage et/ou de signalisation et un terminal permettant un dialogue entre un opérateur et le système informatique, le terminal comportant un écran tactile de dimensions réduites possédant les ressources nécessaires pour afficher des images représentatives de celles desdits éléments de visualisation, et ce, quels que soient leur format, leur résolution ou leur contenu, ces images définissant des plages sensibles que l'opérateur peut désigner au système par une action manuelle sur l'écran tactile du terminal, des moyens permettant de transmettre au système une information en correspondance avec la plage désignée par l'opérateur, des moyens permettant de valider la plage désignée par l'opérateur, et des moyens permettant de sélecter les susdites images.

Bien entendu, les susdites plages sensibles peuvent être associées à de multiples fonctions, telles que, par exemple, des commandes, des saisies, des incrémentations de paramètre, etc... Dans ce cas, chaque plage pourra comprendre des inscriptions permettant d'indiquer, selon le cas, sa nature, sa fonction, le paramètre à modifier, etc...

Avantageusement, le terminal pourra comprendre des moyens permettant de sélecter une ou plusieurs images distinctes de celles des éléments de visualisation pour permettre à l'opérateur d'effectuer un dialogue direct avec le système ou même seulement avec le terminal, indépendamment du système.

Des modes d'exécution de l'invention seront décrits ci-après, à titre d'exemples non limitatifs, avec référence aux dessins annexés dans lesquels :
La figure 1 est une vue schématique d'un terminal de communication de type régie de commande à accès rapide (RCAR) destiné à l'équipement du poste de pilotage d'un aérodyne ;
La figure 2 montre une architecture de planche de bord d'un aérodyne intégrant un terminal de communication ;
La figure 3 est un schéma de raccordement du terminal de communication avec tous les éléments de visualisation de la planche de bord ;
La figure 4 est un schéma synoptique d'un terminal.

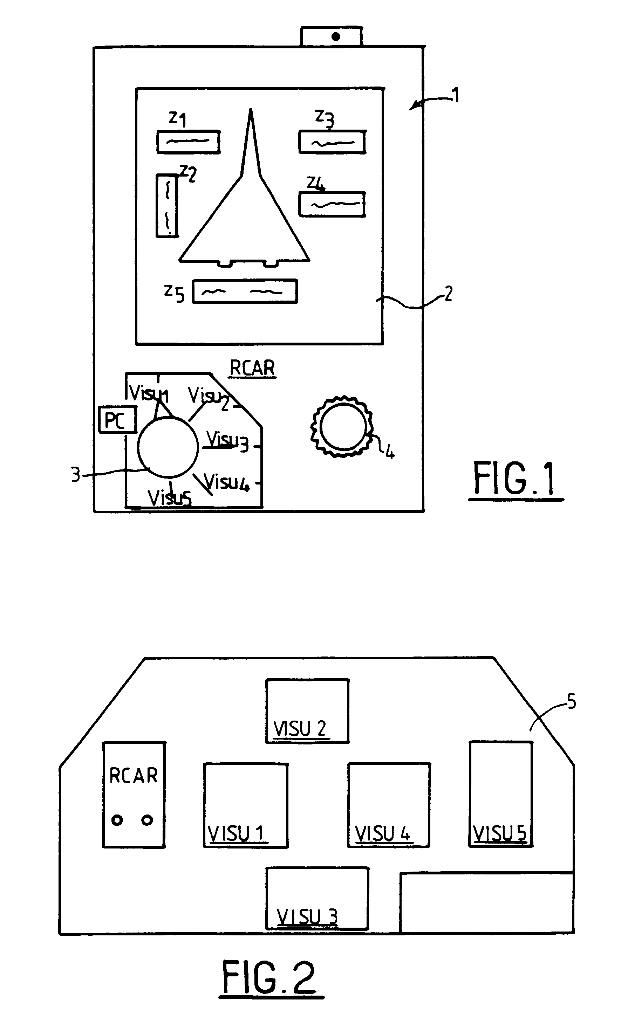

Tel que représenté sur la figure 1, le terminal RCAR faisant partie d'un système selon l'invention se présente sous la forme d'un boîtier parallélépipédique dont la face frontale 1 est en grande partie occupée par un écran tactile 2 pouvant par exemple consister en une cellule à cristaux liquides recouverte d'une surface sensible transparente, de type clavier tactile, qui incorpore au moins une plage sensible de détection permettant une résolution de désignation importante selon le principe connu des surfaces tactiles dites continues.

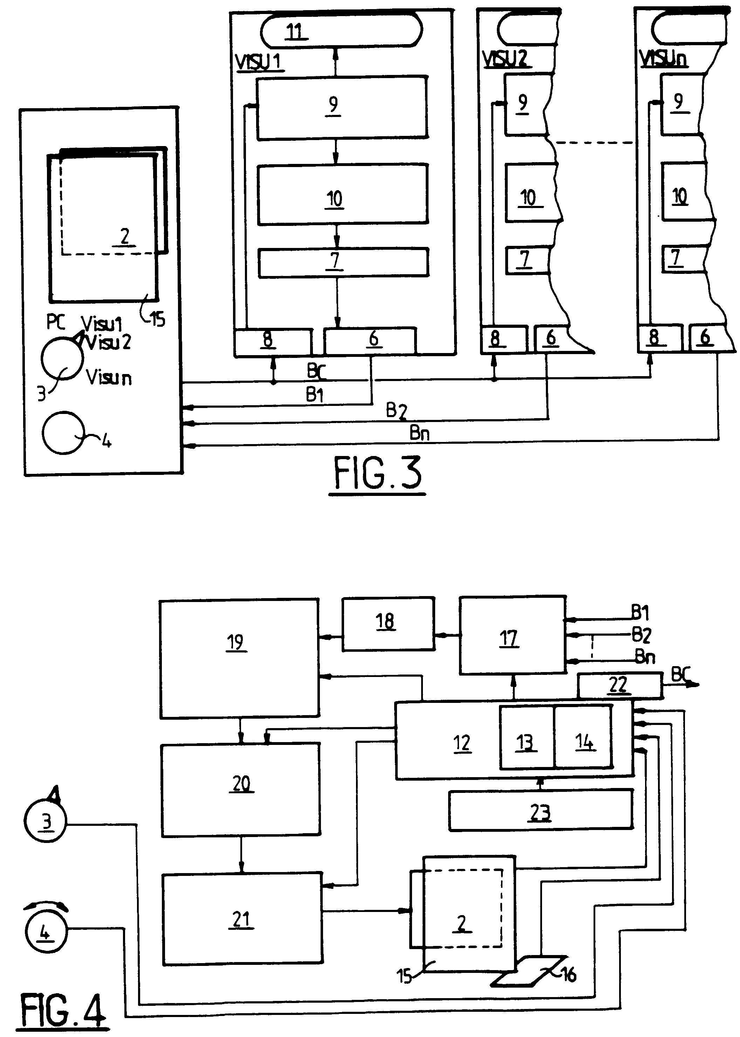

Avantageusement, la surface tactile 15 de l'écran 2 est montée sur un dispositif de détection d'effort 16 (figure 4) qui délivre au moins un signal d'identification lorsqu'un effort exercé sur la surface tactile 15 s'élève au-dessus d'au moins un seuil prédéterminé. Ce signal peut servir pour filtrer les sollicitations parasites ou même pour distinguer les effleurements de l'écran par la main de l'opérateur qui, même si ils ont provoqué un changement d'état sur la surface tactile 15, ne doivent pas être pris en compte par le système, de la même façon qu'une sollicitation plus prononcée.

Dans sa partie qui n'est pas occupée par l'écran 2, la face frontale 1 est équipée d'un sélecteur à bouton rotatif 3, pouvant prendre six positions, PC, visu1, visu2... visu5, et un rotacteur sans fin 4, comprenant un bouton rotatif mobile axialement avec rappel par ressort, dont la rotation sert à engendrer une incrémentation ou une décrémentation, et les déplacements axiaux (sous l'effet d'une pression) servent à effectuer des validations.

Comme représenté sur la figure 2, le terminal RCAR peut être intégré à une planche de bord 5 incluant cinq autres éléments d'affichage et/ou de visualisation, respectivement appelés VISU1... VISU5.

Dans ce cas, il comprend des moyens permettant d'afficher à l'écran 2 une image représentative de celle de l'élément d'affichage correspondant à celui indiqué par le sélecteur, ici l'élément d'affichage VISU1.

La position PC (poste de commande) sert, quant à elle, à passer à un mode de fonctionnement propre, selon lequel l'écran affiche une image qui lui est propre et qui permet à l'opérateur d'effectuer avec le terminal un dialogue indépendant des éléments d'affichage et/ou des visualisations VISU1 à VISU5.

Bien entendu, le terminal RCAR pourrait être installé ailleurs que sur la planche de bord (par exemple sur la banquette centrale entre le pilote et le co-pilote) à condition toutefois qu'il soit à portée de main et dans le champ visuel de l'opérateur.

Le terminal de communication RCAR est connecté aux différents éléments de visualisation par l'intermédiaire d'un bus de commande BC (figure 3) et d'une multiplicité de bus d'image B1 à Bn à raison de un bus d'image par élément de visualisation.

La transmission des données images sur chacun de ces bus image B1 à Bn est assurée par un circuit d'émission prévu dans l'élément de visualisation VISU1 à VISUn correspondant qui présente les images en temps réel, selon un format numérique standardisé et dont l'interprétation (par le terminal RCAR) est identique pour tous les éléments de visualisation.

Afin de simplifier les traitements de données sur les images au sein du terminal RCAR, chaque élément de visualisation VISU1 à VISUn possède un circuit d'élaboration des données standardisées 10, en particulier des informations "pixels" qui servent à caractériser les pixels selon des attributs tels que couleur/luminance.

Un circuit de compression 7 qui reçoit les données du circuit 10 permet de réduire le débit sur le bus image B1, B2, Bn commandé par le circuit d'émission 6.

Ce circuit de compression 7 pourra être de type dit sans perte d'information et réalisé à l'aide de circuits du commerce tels que le circuit intégré A HA 33 70 de la Société Advanced Hardware Architectures, qui exploite un algorithme de compression d'Huffman. Cette réduction de débit permet d'accélérer l'acquisition par le terminal de l'image totale.

Un circuit de réception 8, raccordé au bus de commande BC, permet à chaque élément de visualisation VISU1 à VISUn de recevoir les commandes passées à partir du terminal RCAR et de les répercuter sur le circuit de gestion 9 de l'élément de visualisation puis sur l'afficheur 11 de l'élément de visualisation (passage en vidéo inverse du paramètre sélecté, incrémentation ou décrémentation du paramètre, changement de page, etc...).

Par ailleurs, le circuit de gestion 9 est relié au circuit de compression 7 par l'intermédiaire du circuit d'élaboration de données standardisées 10.

D'une façon plus précise, le terminal RCAR comprend une unité de traitement à microprocesseur 12 associée de façon classique à une mémoire vive RAM 13 et à une mémoire morte ROM 14 (figure 4).

Cette unité de traitement 12 reçoit les informations relatives à l'état des sélections effectuées au moyen de la surface tactile 15 qui recouvre l'écran 2, au détecteur d'effort (représenté schématiquement par le bloc 16), au sélecteur 3, au rotacteur et au poussoir de validation 4.

Elle pilote la chaîne de traitement des données image qui comprend successivement un sélecteur de bus d'entrée 17 qui est raccordé aux bus de données image B1, B2, Bn, un circuit 18 de décompression des données image du bus sélecté, un séquenceur programmable 19 de rangement des "données pixels", dans une mémoire RAM 20 dimensionnée de manière à assurer le stockage de l'image entière, et un séquenceur programmable 21 qui effectue la lecture des données présentes dans la mémoire 20 et gère la présentation de l'image sur l'écran 2.

Le séquenceur programmable 19 reçoit de l'unité de traitement 12 les caractéristiques de rangement à effectuer dans la mémoire 20 en fonction des caractéristiques connues de l'élément de visualisation VISU1, VISU2, VISUn sélecté. Dès la sélection réalisée par le commutateur 3, il reçoit de l'unité de traitement 12 des équations logiques d'initialisation correspondant aux traitements du rangement de données en mémoire RAM 20 à effectuer. Le séquenceur programmable 21 reçoit de l'unité de traitement 12 les équations logiques d'initialisation correspondant aux traitements d'extraction des données en mémoire RAM 20, permettant de réaliser les opérations spécifiques de formatage de l'image présentée sur l'écran.

Les séquenceurs programmables 19 et 21 peuvent être réalisés par exemple à l'aide de circuits intégrés de type "Logic Cell Arrays" ou "Field Programmable Gate Arrays" proposés sous la marque "XILINX", par exemple, dans lesquels les équations logiques des traitements à effectuer sur les données ou entrées, peuvent être modifiées selon les besoins sous le contrôle de l'unité de traitement 12.

L'unité de traitement 12 est en outre reliée au bus de commande BC par l'intermédiaire d'un adaptateur 22 ainsi qu'à une mémoire externe 23 affectée aux programmes relatifs aux modes spécifiques du terminal (tel que, par exemple, le mode "poste de commande" obtenu en plaçant le sélecteur 3 sur la position PC). Dans ce cas, outre le programme d'application, cette mémoire 23 contient les données relatives aux images à présenter à l'écran 2.

Le sélecteur de bus d'entrée 17 permet de relier le terminal RCAR au bus image B1, B2, Bn de la visualisation VISU1, VISU2, VISUn sélectée au moyen du sélecteur 3. Il assure également l'adaptation des signaux reçus.

Le dispositif de décompression 18 est conçu de manière à procéder à l'opération inverse de celle qui est réalisée par les circuits de compression 7 prévus dans les visualisations VISU1, VISU2, VISUn.

Il peut consister en un circuit A HA 33 71 de la Société Advanced Hardware Architectures.

Le bus numérique de commande BC qui est commun à toutes les visualisations VISU1, VISU2, VISUn est un bus multi-récepteurs, par exemple de type RS 232, ARINC 429 ou autres.

Le fonctionnement du dispositif précédemment décrit est alors le suivant :

Le pilote choisit le mode de présentation par une action sur le sélecteur 3.

Si, par exemple, le choix est VISU1, l'unité de traitement 12 qui reçoit cette commande positionne le sélecteur de bus 17 sur le bus B1.

L'unité de traitement 12 charge alors le séquenceur 19 avec les équations de traitement propres aux caractéristiques de l'élément de visualisation VISU1 (mise en forme, cadrage, gestion des couleurs, des arrangements spécifiques...).

L'unité de traitement 12 charge ensuite le séquenceur de lecture 21 avec les équations de traitement propres à l'extraction des données de la mémoire 20 selon l'opération d'affichage demandée (zoom, image totale simplifiée, cadrage...).

Les données d'affichage mises en forme par le séquenceur 21 sont envoyées vers l'écran 2 pour présentation de l'image au pilote.

Celui-ci peut alors manipuler la surface tactile 15 et son détecteur d'effort intégré 16 pour sélectionner par exemple un zoom sur un détail de l'image.

Cette action, prise en compte par l'unité de traitement 12, va entraîner une nouvelle programmation des équations de traitement du séquenceur 21 afin d'extraire à présent de la mémoire 20 les éléments d'image demandés.

Si le pilote décide ensuite de modifier un paramètre présenté sur l'écran 2 du terminal RCAR, il actionne la surface tactile 2 dans la plage correspondant au paramètre à modifier.

Ceci entraîne l'émission d'un mot de commande vers l'élément de visualisation sélecté (VISU1, dans cet exemple) qui prendra cette commande en compte et modifiera son image présentée (exemple : vidéo inverse du symbole sélecté).

Outre la prise en compte de la sélection de l'élément de visualisation et de son affichage, d'autres traitements conséquents peuvent être réalisés par l'élément de visualisation sélecté, hors contrôle du terminal RCAR. Celui-ci bénéficiera, par contre, de l'information présentée sur l'élément de visualisation et qui est reproduite sur son écran 2 au moyen du bus B1.

De la même façon, les modifications de paramètres commandées par le pilote sont transmises, au bus BC, par le circuit d'adaptation 22, puis prises en compte par un circuit de réception 8 de l'élément de visualisation VISU1, VISU2, VISUn sélecté, et l'image engendrée sur l'afficheur 11 de cet élément de visualisation sera ensuite recopiée sur l'écran 2 du terminal RCAR.

Bien entendu, l'invention ne se limite pas à un type déterminé d'action que l'opérateur peut engendrer à la suite d'une sollicitation sur la couche tactile de l'écran 2 du terminal RCAR.

Ainsi, à titre d'exemple, la figure 1 montre le terminal RCAR sur l'afficheur duquel est recopiée une page de visualisation provenant de l'élément de visualisation VISU1 et présentant plusieurs zones Z1, Z2, Z3, Z4, Z5, indiquées par des cadres rectangulaires à l'intérieur de chacun desquels est inscrite la fonction correspondante.

Chaque zone ainsi définie peut être sélectée par l'opérateur en posant le doigt sur la surface tactile, directement en regard de la zone choisie.

Dans le cas où l'action suivante de l'opérateur est une incrémentation ou une décrémentation du paramètre affiché dans le cadre, l'évolution du paramètre modifié pourra être suivie aussi bien sur l'élément de visualisation VISU1 que sur l'afficheur RCAR qui recopie celle-ci.

Avantageusement, le détecteur d'effort 16 et la surface tactile 15 qui lui est associée, seront conçus de manière à permettre la distinction entre un appui franc de sélection et un effleurement de la surface tactile 15.

Dans ce cas, une action d'effleurement localisée pourra être interprétée par l'unité centrale 12 comme une commande de zoom sur la zone actionnée, sans répercussion sur l'élément de visualisation sélecté par les moyens de sélection 3.

Un appui franc (force d'appui supérieure à un seuil) sur une zone pourra être alors interprété par l'unité centrale 12 comme une commande de type système, avec répercussion sur l'élément de visualisation sélecté.

En outre, une action d'effleurement large (par exemple un balayage transversal sur tout l'écran) pourra être interprétée par l'unité centrale 12 comme une commande de zoom arrière, sans répercussion sur l'élément de visualisation sélecté.

## Revendications

1. Système informatique comprenant au moins un processeur, plusieurs éléments de visualisation (VISU1, VISU2..., VISUn) et un terminal permettant un dialogue entre un opérateur et le système informatique,
caractérisé en ce que le terminal comprend un écran tactile de dimensions réduites possédant les ressources nécessaires pour afficher des images représentatives de celles desdits éléments de visualisation, et ce, quels que soient leur format, leur résolution ou leur contenu, ces images définissant des plages sensibles (Z1 à Z5) que l'opérateur peut désigner au système par une action manuelle, des moyens permettant de transmettre au système une information en correspondance avec la plage désignée par l'opérateur, des moyens (16) permettant de valider la plage désignée par l'opérateur, et des moyens (3) permettant de sélecter les susdites images.

2. Système informatique selon la revendication 1,
caractérisé en ce que les plages sensibles (Z1 à Z5) sont associées à des fonctions telles que des commandes, des saisies ou des incrémentations de paramètre et comprennent des inscriptions permettant d'indiquer, selon le cas, sa nature, sa fonction et/ou le paramètre à modifier.

3. Système informatique selon l'une des revendications 1 et 2,
caractérisé en ce que le terminal comprend des moyens permettant de sélecter une ou plusieurs images distinctes de celles des éléments de visualisation, pour permettre à l'opérateur d'effectuer un dialogue direct avec le système ou même seulement avec le terminal, indépendamment du système.

4. Système informatique selon l'une des revendications précédentes,
caractérisé en ce que le terminal comprend une surface tactile (15) montée sur un dispositif de détection d'efforts (16) qui délivre au moins un signal d'identification fonction de l'effort et qui permet d'identifier le passage desdits efforts par différents seuils.

5. Système informatique selon l'une des revendications précédentes,
caractérisé en ce que le terminal est connecté aux différents éléments de visualisation (VISU1... VISUn) par l'intermédiaire d'un bus de commande (BC) et d'une multiplicité de bus image (B1... Bn), à raison de un bus image (B1... Bn) par élément de visualisation (VISU1... VISUn).

6. Système informatique selon la revendication 5,
caractérisé en ce que chaque élément de visualisation (VISU1... VISUn) comprend un circuit d'élaboration de données standardisées (10) relié à un circuit d'émission (6) sur l'un des bus image (B1... Bn) par l'intermédiaire d'un circuit de compression (7).

7. Système informatique selon la revendication 5 ou 6,
caractérisé en ce que le terminal comprend une surface tactile (15) montée sur un dispositif de détection d'efforts (16) qui délivre au moins un signal d'identification fonction de l'effort et qui permet d'identifier le passage desdits efforts par différents seuils, et une unité de traitement à microprocesseur (12) qui reçoit des informations relatives à l'état d'actionnement de la surface tactile (15), au dispositif de détection d'effort (16) et aux moyens de sélection et de validation (3,4), cette unité de traitement (12) pilotant une chaîne de traitement des données image comportant un sélecteur de bus d'entrée (17) qui est raccordé aux bus de données image (B1, B2, Bn), un circuit de décompression des données image du bus sélecté (18) , un premier séquenceur programmable (19) de rangement des données image dans une mémoire (20) et un second séquenceur programmable (21) qui effectue la lecture des données présentes dans la mémoire (20) et gère la présentation de l'image sur l'écran (2).

8. Système informatique selon la revendication 7,
caractérisé en ce que la susdite unité de traitement (12) est reliée au bus de commande (BC) par l'intermédiaire d'un adaptateur (22) pour transmettre à un élément de visualisation sélecté les informations introduites par l'opérateur au moyen de la surface tactile (15).

9. Système informatique selon la revendication 7 ou 8,
caractérisé en ce que la susdite unité de traitement (12) est associée à une mémoire (23) affectée à des programmes relatifs à des modes spécifiques du terminal sélectables par les susdits moyens de sélection (3).

10. Système informatique selon la revendication 7,
caractérisé en ce que, dès la sélection réalisée par les moyens de sélection (3), le premier séquenceur programmable (19) reçoit de l'unité de traitement (12) des équations logiques d'initialisation correspondant aux traitements du rangement de données dans la mémoire (20) à effectuer.

11. Système informatique selon l'une des revendications 7 et 10,
caractérisé en ce que le second séquenceur programmable (21) reçoit de l'unité de traitement (12) des équations logiques d'initialisation correspondant aux traitements d'extraction des données de la mémoire (20) permettant de réaliser des opérations spécifiques de formatage de l'image présentée sur l'écran (2).

12. Système informatique selon l'une des revendications 7 à 11,
caractérisé en ce que la surface tactile (15) associée à son détecteur d'effort (16) permet la distinction entre un appui franc de sélection et un effleurement.

13. Système informatique selon la revendication 12,
caractérisé en ce qu'une action d'effleurement localisée est interprétée par l'unité de traitement (12) comme une commande de zoom sur la zone actionnée, sans répercussion sur l'élément de visualisation sélecté par les moyens de sélection (3).

14. Système informatique selon la revendication 12 ou 13,
caractérisé en ce qu'un appui franc sur une zone est interprété par l'unité de traitement (12) comme une commande de type système, avec répercussion sur l'élément de visualisation sélecté.

15. Système informatique selon l'une des revendications 12 à 14,
caractérisé en ce qu'une action d'effleurement large, tel qu'un balayage transversal sur tout l'écran, est interprétée par l'unité de traitement (12) comme une commande de zoom arrière sans répercussion sur l'élément de visualisation sélecté.

## Patentansprüche

1. Datenverarbeitungssystem mit wenigstens einem Prozessor, mehreren Anzeigeelementen (VISU1, VISU2 ..., VISUn) und einem Terminal, das einen Dialog zwischen einer Bedienungsperson und dem Datenverarbeitungssystem ermöglicht, dadurch gekennzeichnet, daß das Terminal einen Tastbildschirm mit reduzierten Abmessungen, der über die nötigen Betriebsmittel zur Anzeige von Grafiken verfügt, die denjenigen der Anzeigeelemente entsprechen, und zwar unabhängig von deren Format, Auflösung oder Inhalt, wobei diese Grafiken Sensorfelder (Z1 bis Z5) festlegen, welche die Bedienungsperson durch manuelle Betätigung für das System kennzeichnen kann, Mittel zur Übertragung einer mit dem von der Bedienungsperson gekennzeichneten Feld übereinstimmenden Information an das System, Mittel (16) zur Bestätigung des durch die Bedienungsperson gekennzeichneten Feldes und Mittel (3) zur Auswahl der Grafiken aufweist.

2. Datenverarbeitungssystem nach Anspruch 1, dadurch gekennzeichnet, daß die Sensorfelder (Z1 bis Z5) Funktionen, wie z. B. Befehlen, Eingaben oder Parametererhöhungen, zugeordnet sind und Beschriftungen umfassen, die es gestatten, gegebenenfalls dessen Art, dessen Funktion und/oder den zu modifizierenden Parameter anzugeben.

3. Datenverarbeitungssystem nach einem der Ansprüche 1 und 2, dadurch gekennzeichnet, daß das Terminal Mittel aufweist, die es erlauben, eine oder mehrere Grafiken auszuwählen, die sich von denen der Anzeigeelemente unterscheiden, um es der Bedienungsperson zu ermöglichen, einen direkten Dialog mit dem System oder auch nur mit dem Terminal, unabhängig vom System, zu führen.

4. Datenverarbeitungssystem nach einem der vorhergehenden Ansprüche, dadurch gekennzeichnet, daß das Terminal eine Tastoberfläche (15) aufweist, die auf einer Kraftmeldevorrichtung (16) montiert ist, die wenigstens ein von der Kraft abhängiges Identifikationssignal liefert und das Erkennen des Überschreitens verschiedener Schwellenwerte durch die Kräfte ermöglicht.

5. Datenverarbeitungssystem nach einem der vorhergehenden Ansprüche, dadurch gekennzeichnet, daß das Terminal über einen Steuerbus (BC) sowie über eine Vielzahl von Grafikbussen (B1... Bn), mit einem Grafikbus (B1... Bn) pro Anzeigeelement (VISU1... VISUn), mit den verschiedenen Anzeigeelementen (VISU1... VISUn) verbunden ist.

6. Datenverarbeitungssystem nach Anspruch 5, dadurch gekennzeichnet, daß jedes Anzeigeelement (VISU1... VISUn) einen Schaltkreis (10) zur Erzeugung von standardisierten Daten aufweist, der über einen Schaltkreis (7) zur Komprimierung mit einem Sendeschaltkreis (6) auf einem der Grafikbusse (B1... Bn) verbunden ist.

7. Datenverarbeitungssystem nach Anspruch 5 oder 6, dadurch gekennzeichnet, daß das Terminal eine Tastoberfläche (15), die auf einer Kraftmeldevorrichtung (16) montiert ist, die wenigstens ein von der Kraft abhängiges Identifikationssignal liefert und das Erkennen des Überschreitens verschiedener Schwellenwerte durch die Kräfte ermöglicht, sowie eine Verarbeitungseinheit (12) mit Mikroprozessor aufweist, welche Informationen bezüglich des Betätigungszustandes der Tastoberfläche (15), der Kraftmeldevorrichtung (16) und der Mittel (3, 4) zur Auswahl und zur Bestätigung empfängt, wobei diese Verarbeitungseinheit (12) eine Kette zur Verarbeitung der Bilddaten steuert, die einen mit den Bilddatenbussen (B 1, B2, Bn) verbundenen Eingabebus-Selektor (17), einen Schaltkreis zur Dekomprimierung der Bilddaten des ausgewählten Busses (18), einen ersten programmierbaren Befehlsgeber (19) zum Speichern der Bilddaten in einem Speicher (20) und einen zweiten programmierbaren Befehlsgeber (21) umfaßt, der das Lesen der in dem Speicher (20) vorhandenen Daten durchführt und die Darstellung der Grafik auf dem Bildschirm (2) steuert.

8. Datenverarbeitungssystem nach Anspruch 7, dadurch gekennzeichnet, daß die Verarbeitungseinheit (12) über einen Adapter (22) an den Steuerbus (BC) angeschlossen ist, um die durch die Bedienungsperson über die Tastoberfläche (15) eingegebenen Informationen an ein ausgewähltes Anzeigeelement zu übertragen.

9. Datenverarbeitungssystem nach Anspruch 7 oder 8, dadurch gekennzeichnet, daß die Verarbeitungseinheit (12) mit einem Speicher (23) verbunden ist, der Programmen, welche durch die Auswahlmittel (3) auswählbare spezifische Modi des Terminals betreffen, zugewiesen ist.

10. Datenverarbeitungssystem nach Anspruch 7, dadurch gekennzeichnet, daß nach der durch die Auswahlmittel (3) durchgeführten Auswahl der erste programmierbare Befehlsgeber (19) von der Verarbeitungseinheit (12) logische Gleichungen zur Initialisierung empfängt, die den auszuführenden Verarbeitungen zum Speichern der Daten im Speicher (20) entsprechen.

11. Datenverarbeitungssystem nach einem der Ansprüche 7 und 10, dadurch gekennzeichnet, daß der zweite programmierbare Befehlsgeber (21) von der Verarbeitungseinheit (12) logische Gleichungen zur Initialisierung empfängt, die den auszuführenden Verarbeitungen zum Extrahieren der Daten aus dem Speicher (20) entsprechen, wodurch die spezifischen Vorgänge zur Formatierung der auf dem Bildschirm (2) dargestellten Grafik ausgeführt werden können.

12. Datenverarbeitungssystem nach einem der Ansprüche 7 bis 11, dadurch gekennzeichnet, daß die Tastoberfläche (15), die ihrem Kraftmelder (16) zugeordnet ist, die Unterscheidung zwischen einem echten Auswahldruck und einem Streichen ermöglicht.

13. Datenverarbeitungssystem nach Anspruch 12, dadurch gekennzeichnet, daß eine lokalisierte Streichbewegung von der Verarbeitungseinheit (12) als Befehl zum Zoomen auf die betätigte Zone interpretiert wird, ohne sich auf das durch die Auswahlmittel (3) ausgewählte Anzeigeelement auszuwirken.

14. Datenverarbeitungssystem nach Anspruch 12 oder 13, dadurch gekennzeichnet, daß ein echter Druck auf eine Zone von der Verarbeitungseinheit (12) als Befehl vom Typ Systembefehl interpretiert wird und sich auf das ausgewählte Anzeigeelement auswirkt.

15. Datenverarbeitungssystem nach einem der Ansprüche 12 bis 14, dadurch gekennzeichnet, daß eine großflächige Streichbewegung, wie z. B. ein Streifen quer über den ganzen Bildschirm, von der Verarbeitungseinheit (12) als Befehl zum Wegzoomen interpretiert wird, ohne sich auf das ausgewählte Anzeigeelement auszuwirken.

## Claims

1. A computer system comprising at least a processor, plural viewing elements (VISU1, VISU2 ... VISUn) and a terminal enabling dialogue between an operator and the computer system, characterized in that the terminal comprises a touch-sensitive screen of reduced dimensions having the resources required to display images representative of those of said viewing elements, irrespective of their format, resolution or content, said images defining sensitive areas (Z1 to Z5) that said operator can designate to the system through manual action, a means enabling transmission to said system of information corresponding to the area designated by said operator, a means (16) enabling validation of said area designated by said operator, and a means (3) enabling selection of the above-mentioned images.

2. The computer system as claimed in claim 1, characterized in that the sensitive areas (Z1 to Z5) are associated with functions such as commands, entries or parameter incrementations, and comprise inscriptions indicating their nature, function, and/or the parameter to be modified, as the case may be.

3. The computer system as claimed in one of claims 1 and 2, characterized in that the terminal comprises a means enabling the selection of one or more images distinct from those of the viewing elements, in order to enable the operator to engage in direct dialogue with the system or even with said terminal alone, independently of said system.

4. The computer system as claimed in one of the preceding claims, characterized in that the terminal comprises a touch-sensitive surface (15) mounted on an effort detection device (16) which provides at least one identification signal as a function of the effort and which enables identification of the exceeding of different thresholds by said efforts.

5. The computer system as claimed in one of the preceding claims, characterized in that the terminal connected to the different viewing elements (VISU1 ... VISUn) via a control bus (BC) and a multiplicity of image busses (B1 to Bn), at the rate of one image bus (B1 ... Bn) per viewing element (VISU1 ... VISUn).

6. The computer system as claimed in claim 5, characterized in that each viewing element (VISU1 ... VISUn) comprises a circuit (10) for elaborating standardized data connected to a transmitting circuit (6) on one of the image busses (B1 ...Bn) via a compressing circuit (7).

7. The computer system as claimed in claim 5 or 6, characterized in that the terminal comprises a touch-sensitive surface (15) mounted on the effort detector (16) which provides at least an identification signal as a function of the effort, and which enables identification of the exceeding of different thresholds by said efforts, and a microprocessor-based processing unit (12) which receives information relating to the activation status of the touch-sensitive surface (15), the effort detector (16) and the selection and validation means (3, 4), said processing unit (12) piloting an image data processing chain which comprises an input bus selector (17) connected to the image data busses (B1, B2, Bn), a decompressing circuit to decompress the image data from the selected bus (18), a first programmable sequencer (19) for the storage of image data in a memory (20) and a second programmable sequencer (21) which reads the data in said memory (20) and manages the presentation of the image on said screen (2).

8. The computer system as claimed in claim 7, characterized in that said processing unit (12) is connected to the control bus (BC) via an adapter (22) in order to transmit to a viewing element selected the information entered by the operator via the touch-sensitive surface (15).

9. The computer system as claimed in claim 7 or 8, characterized in that said processing unit (12) is associated with a memory (20) assigned to programs relating to specific modes of said terminal which can be selected by means of said selection means (3).

10. The computer system as claimed in claim 7, characterized in that, once the selection has been made via the selection means (3), the first programmable sequencer (19) receives, from the processing unit, logic initializing equations corresponding to the data storage processings to be performed in the memory (20).

11. The computer system as claimed in one of claims 7 and 10, characterized in that the second programmable sequencer (21) receives from the processing unit (12) logic initializing equations corresponding to the data retrieval processings to be performed from the memory (20), enabling performance of the specific formatting operations concerning the image presented on the screen (2).

12. The computer system as claimed in one of claims 7 to 11, characterized in that the touch-sensitive surface (15) associated with its effort detector (16) enables a distinction to be made between a clear-cut pressing of a selection and a light touching thereof.

13. The computer system as claimed in claim 12, characterized in that a localized light touching is interpreted by the processing unit (12) as a zoom-in command concerning the activated zone, without any effect on the viewing element selected by the selection means (3).

14. The computer system as claimed in claim 12 or 13, characterized in that a clear-cut pressing on a zone is interpreted by the processing unit (12) as a system type command, with effect on the viewing element selected.

15. The computer system as claimed in one of claims 12 to 14, characterized in that a broad light touching, such as a transversal sweeping of the entire screen, is interpreted by the processing unit (12) as a zoom-out command, without effect on the viewing element selected.
